(19) Europäisches Patentamt
European Patent Office
Office européen des brevets

(11) Veröffentlichungsnummer: **0 042 470**
**B1**

(12) # EUROPÄISCHE PATENTSCHRIFT

(45) Veröffentlichungstag der Patentschrift: **28.11.84**

(51) Int. Cl.$^3$: **C 08 G 18/10,** C 08 G 18/32, C 08 J 5/08, C 08 L 75/04

(21) Anmeldenummer: **81102062.7**

(22) Anmeldetag: **19.03.81**

(54) **Hitzehärtbare Formmassen, Verfahren zu deren Herstellung und deren Verwendung in einem Verfahren zur Herstellung von Formkörpern.**

(30) Priorität: **03.04.80 DE 3013263**

(43) Veröffentlichungstag der Anmeldung:
**30.12.81 Patentblatt 81/52**

(45) Bekanntmachung des Hinweises auf die Patenterteilung:
**28.11.84 Patentblatt 84/48**

(84) Benannte Vertragsstaaten:
**AT BE CH DE FR GB IT LI NL SE**

(58) Entgegenhaltungen:
**EP-A-0 019 803**
**EP-A-0 027 202**
**DE-A-2 164 381**

(73) Patentinhaber: **BAYER AG**
**Konzernverwaltung RP Patentabteilung**
**D-5090 Leverkusen 1 Bayerwerk (DE)**

(72) Erfinder: **Recker, Klaus, Dr.**
**Wolfskaul 6**
**D-5000 Köln 80 (DE)**
Erfinder: **Grögler, Gerhard, Dr.**
**von Diergardt-Strasse 46**
**D-5090 Leverkusen 1 (DE)**

**EP 0 042 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft lagerstabile, lösungsmittelfreie und hitzehärtbare Formassen auf Polyurethanbasis, die ein faserförmiges Verstärkungsmaterial enthalten, sowie die Herstellung von faserverstärkten Formkörpern unter Verwendung der Formmassen.

Faserverstärkte Formkörper können nach Verfahren des Standes der Technik mit einer Vielzahl unterschiedlicher synthetischer Polymerer hergestellt werden, wobei sich als besonders vorteilhaftes Verstärkungsmaterial Glasfasern erwiesen haben. Es ist z.B. bekannt, aus ungesättigte Polyester enthaltenden Harzen (im folgenden "UP-Harze" genannt) und Glasfasern lagerstabile Halbzeuge (Harzmatten, "Prepregs", Preßmassen) herzustellen, die mit Hilfe beheizter Pressen verformt und zu Formkörpern sehr hoher Festigkeit und Steifigkeit ausgehärtet werden können. Dieses Verfahren hat jedoch mehrere Nachteile: So führen die üblicherweise als Lösungsmittel für die UP-Harze verwendeten vinylgruppenhaltigen Monomeren (z.B. Styrol) bei der radikalisch initiierten Polymerisation zu einer sehr hohen Vernetzungsdichte, die eine hohe Sprödigkeit und Kerbschlagempfindlichkeit des Formkörpers bewirkt. Überdies erschwert die Anwesenheit von Lösungsmitteln die Verarbeitung, da umfangreiche Maßnahmen zur Absaugung der Lösungsmitteldämpfe getroffen werden müssen und explosionsgeschützte Verarbeitungsanlagen erforderlich sind.

Zur Herstellung des Halbzeugs maß das UP-Harz eingedickt werden, damit beim späteren Heiz-/Preß-Vorgang ein einwandfreier Transport der Verstärkungsfasern erfolgt. Hierzu werden dem Harz meist geringe Mengen eines Erdalkalioxids oder -hydroxids zugesetzt, das einen langwierigen Reifeprozeß in Gang setzt, der üblicherweise 7—21 Tage dauert und in sogenannten "Reifeschränken" bei etwas erhöhter Temperature erfolgen muß. Diese Zwischenlagerung erfordert einen erheblichen Zeit- und Kapitalaufwand und beeinträchtigt die Wirtschaftlichkeit des Verfahrens.

Auch die Verstärkung von Polyurethan-Elastomeren mit Hilfe von Fasermaterialien ist bekannt. So können z.B. nach dem Spritzgieß- oder Reaktionsspirtzgießverfahren glasfaserverstärkte Polyurethanformkörper hergestellt werden. Die mechanischen Eigenschaften, insbesondere die Biegesteifigkeit solcher Formkörper lassen sich jedoch nur in begrenztem Maße steigern, da aus verfahrenstechnischen Gründen die Länge das Fasermaterials ca. 1 bis 6 mm nicht übersteigen darf. Als besonders nachteilig muß angesehen werden, daß aufgrund der begrenzten Faserlänge der thermische Ausdehnungskoeffizient der verstärkten Polyurethan-Elastomeren immer noch ein Vielfaches des Ausdehnungskoeffizienten von Stahl beträgt.

In der DE—PS—968 566 wird ein Verfahren zur Herstellung hochmolekularer, vernetzter Kunststoffe beschrieben, bei welchem zunächst aus einem Hydroxylgruppen aufweisenden Polyester, einem Glykol und einem Überschuß an Diisocyanat ein Zwischenprodukt hergestellt wird, das dann durch Umsetzung mit einem Überschuß eines Uretdiongruppen-haltigen Diisocyanats zu lagerstabilien Halbzeugen führt. Diese Halbzeuge können schließlich plastisch verformt und durch Temperatureinwirkung zu elastischen Formkörpern ausgehärtet werden.

Die in dieser Patentschrift beschriebenen Polyurethan-Elastomere besitzen zwar hohe Elastizität und Zähigkeit, reichen aber in ihrer Härte und Steifigkeit für viele Anwendungen nicht aus. Die Verwendung von faserförmigem Verstärkungsmaterial wird in DE—PS—968 566 nicht erwähnt. Zwar ließen sich Glasfasern mit einer Länge >6 mm prinzipiell in das oben erwähnte Zwischenprodukt einarbeiten; die hohe Viskosität des Zwischenproduktes würde aber zum Einmischen des Fasermaterials und des für die Vernetzung notwendigen Uretdiondiisocyanats Walzwerke oder Kneter erfordern, wie sie bei der Kautschukverarbeitung üblich sind. Bei einem solchen Einarbeiten des Fasermaterials würden jedoch verfahrensbedingt so hohe Scherkräfte auftreten, daß die Einzelfasern auf Bruchteile ihrer Ausgangslänge zermahlen werden, so daß die gewünschten Effekte der Versteifung einerseits und der Senkung des thermischen Ausdehnungskoeffizienten andererseits nicht mehr in vollem Umfang eintreten könnten.

Der Erfindung liegt die Aufgabe zugrunde, neue lösungsmittelfreie, lagerstabile Formmassen zur Verfügung zu stellen, die durch Verpressen bei erhöhter Temperatur zu Formkörpern hoher Steifigkeit, guter Schalgzähigkeit und hoher Dimensionsstabilität ausgehärtet werden können.

Diese Aufgabe wird mit den erfindungsgemäß zur Verfügung gestellten Formmassen gelöst.

Der Erfindung liegt ferner die Aufgabe zugrunde, ein Verfahren zur Verfügung zu stellen, mit dessen Hilfe faserverstärkte Formkörper hoher Steifigkeit, guter Schlagzähigkeit und hoher Dimensionsstabilität in wirtschaftlich vertretbaren Zeiträumen, d.h. ohne langwierige Zwischenlagerung des Verkörpers, hergestellt werden können.

Diese Aufgabe wird mit dem erfindungsgemäßen Verfahren gelöst.

Gegenstand der vorliegenden Erfindung sind im wesentlichen lösungsmittelfreie Formmassen aus

A) 92—30 Gew.-%, bevorzugt 87—32 Gew.-%, bezogen auf A)+B)+C), einer gegenüber Isocyanaten reaktive Wasserstoffatome aufweisenden Verbindung,
B) 24—1 Gew.-%, bevorzugt 18—2, Gew.-%, bezogen auf A)+B)+C), eines Polyisocyanats mit einem Schmelzpunkt oberhalb 120°C, bevorzugt oberhalb von 150°C, und
C) 5—69 Gew.-%, bevorzugt 11—50 Gew.-%, bezogen auf A)+B)+C), eines organischen oder anorganischen Füllstoffes,

wobei das NCO/aktives H-Äquivalentverhältnis (unter Berücksichtigung eventuell verkappter NCO-Gruppen) der Komponenten A) und B) zwischen 1:1 und 1:1,75 liegt, welche dadurch gekennzeichnet sind, daß

(1) Komponente A) ein Aminogruppe aufweisendes Präpolymer mit einer Viskosität von vorzugsweise mindestens 20 Pa.s/25°C ist, das
0,3—4 bevorzugt 0,5—2 Gew.-%, bezogen auf Präpolymer, an freien primären und/oder sekundären Aminogruppen,
1,5—10 Gew.-%, bevorzugt 5—7,5 Gew.-% an Urethangruppen —NH—CO—O und
1,5—10 Gew.%, bevorzugt 5—7,5 Gew.-% an Harnstoffgruppen —NH—CO—NH— sowie gegebenenfalls
1—5 Gew.-%, bezogen auf Präpolymer, eines Molekularsiebs vom Natriumalumosilikattyp und
0,1—5 Gew.-%, bezogen auf Präpolymer, eines oder mehrerer Aktivatoren, enthält,

und daß

(2) der als Komponent C) verwendete Füllstoff ein Fasermaterial mit einer Faserlänge von 0,1—100 mm, bevorzugt 10—80 mm, besonders bevorzugt 20—60 mm, ist.

Gegenstand der Erfindung ist ferner ein Verfahren zur Herstellung der erfindungsgemäßen Formmassen bzw. zu deren Weiterverarbeitung zu faserverstärkten Formkörpern auf Polyurethanbasis durch Umsetzung von Polyisocyanaten mit gegenüber Isocyanaten reaktive Wasserstoffatome aufweisenden Verbindungen in Gegenwart eines faserförmigen Verstärkungsmaterials, welches dadurch gekennzeichnet ist, daß man in einer ersten Stufe bei einer Temperatur von 10 bis 70°C, vorzugsweise bei 20 bis 50°C,

a) 95—70 Gew.-%, bevorzugt 90—75 Gew.-%, bezogen auf die Summe a)+b), eines NCO-Gruppen aufweisenden Präpolymeren mit
b) 5—30 Gew.-%, bevorzugt 10—25 Gew.-%, bezogen auf a)+b), einer Verbindung mit 2 bis 4, vorzugsweise 2, Aminogruppen und einem Molekulargewicht vorzugsweise unter 200, bzw. einer dazu äquivalenten Menge Wasser, gegebenenfalls in Gegenwart von
c) 1—5 Gew.-%, bezogen auf a)+b), eines Molekularsiebs vom Natriumaluminosilikattyp und/oder
d) 0,1—5 Gew.-%, bezogen auf a)+b), eines oder mehrerer Aktivatoren,

zu einem 0,3 bis 4, bevorzugt 0,5 bis 2 Gew.-% an primären und/oder sekundären Aminogruppen, 1,5 bis 10, bevorzugt 5 bis 7,5 Gew.-% Urethangruppen und 1,5 bis 10, bevorzugt 5 bis 7,5 Gew.-% Harnstoffgruppen aufweisenden Vorpolymeren A) umsetzt, mit der Maßgabe, daß die Komponenten a) und b) be dier gewählten Reaktionstemperature flüssig sind und das Äquivalentverhältnis zwischen den NCO-Gruppen der Komponente a) zu den Aminogruppen der Komponente b) zwischen 0,40:1 und 0,85:1, bevorzugt zwischen 0,50:1 und 0,80:1, besonders bevorzugt zwischen 0,60:1 und 0,75:1 liegt, wobei man während oder vor der Polyadditionsreaktion der Komponenten a) und b) 1—24 Gew.-%, vorzugsweise 2—18 Gew.-%, bezogen auf A)+B)+C, eines Polyisocyanats B) mit einem Schmelzpunkt oberhalb von 120°C, bevorzugt oberhalb von 150°C, und 5—69 Gew.-%, bevorzugt 11—50 Gew.-%, bezogen auf A)+B)+C), eines Fasermaterials C) mit einer Faserlänge von 0,1 bis 100 mm, bevorzugt 10 bis 80 mm, besonders bevorzugt 20 bis 60 mm zusetzt und in einem zweiten Schritt zu einem beliebigen späteren Zeitpunkt das so erhaltene lagerstabile Zwischenprodukt bei einer Temperatur oberhalb von 90°C, vorzugsweise zwischen 110 und 150°C, und einem Druck zwischen 10 und 300 bar unter Formgebung aushärtet.

Zur Herstellung der Polyaminoverbindung A) werden NCO-Gruppen aufweisende Präpolymere a) mit Aminogruppen aufweisenden Verbindungen b) umgesetzt. Als Ausgangskomponenten bei der Herstellung des NCO-Gruppen aufweisenden Präpolymeren kommen als Isocyanatkomponente im Prinzip alle an sich bekannten, vorzugsweise bei Raumtemperatur flüssigen Polyisocyanate in Frage. Es sind diese aliphatische, cycloaliphatische, araliphatische, aromatische und hetercyclische Polyisocyanate, wie sie z.B. von W. Siefken in Justus Liebigs Annalen der Chemie, 562, Seiten 75 bis 136 beschrieben werden, beispielsweise solche der Formel

$$Q\ (NCO)_n$$

in der
n=2—4, vorzugsweise 2, und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,
oder einen araliphatischen Kohlenwasserstoffrest mit 8—15, vorzugsweise 8—13 C-Atomen,

bedeuten, z.b. Äthylen-diisocyanat, 1-4-Tetramethylendiisocyanat, 1,6-Hexamethylendiisocyanat, 1,12-Dodecandiisocyanat, Cyclobutan-1,3-diisocyanat, Cyclohexan-1,3 und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotolylendiisocyanat sowie beliebige Gemische dieser Isomeren, Hexahydro-1,3- und/oder -1,4-phenylendiisocyanat, Perhydro-2,4′- und/oder -4,4′-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, sowie Naphthylen-1,5-diisocyanat.

Ferner kommen beispielsweise erfindungsgemäß in Frage: Triphenylmethane-4,4′,4″-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisen Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330. Allphanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. ind der BE-Patentschrift 752 261 oder in den US-Patentschrift 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannte werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyde-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Tolylendiisocyanat bzw. vom 4,4′- und/oder 2,4′-Diphenylmethandiisocyanat ableiten.

Zur Herstellung der NCO-terminierten Präpolymeren a) eignen sich als Polyolkomponente bei der Reaktionstemperatur, vorzugsweise unterhalb von 30°C, flüssige Verbindungen mit 2 bis 8 Hydroxylgruppen und einem Molekulargewicht zwischen 300 und 10 000, gegebenenfalls ein Gemisch aus Polyolen mit einem Molekulargewicht zwischen 1000 und 10 000, bzw. zwischen 300 und 950. Bevorzugt sind Polyole vom Molekulargewicht 2000 bis 8000, insbesondere 3000 bis 6000, bzw. Polyole vom Molekulargewicht 350 bis 800, insbesondere 400 bis 600, z.B. 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

Die in Frage kommenden Hydroxylgruppen aufweisenden Polyester sind z.B. Umsetzungsprodukte von mehrwertigen vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder hetercyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte

ungesättigte Fettsäure, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig enständige Carboxylgruppen aufweisen, Auch Polyester aus Lactonen, z.b. ε-Caprolacton, oder aus Hydroxycarbonsäuren, z.b. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyester sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z.B. in den De-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

Als Polyacetale kommen z.B. die aus Glykolen, wie Diethylenglykol. Triethylenglykol, 4,4'-Dioxethoxydiphenyldimethylmethan, Hexandiol und Formaldehyd her stellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist aus möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppe einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppe aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift

2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und amino-funktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 608 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindunge, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bie Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschrift 2 714 291, 2 739 620 und 2 654 746) können mit besonderem Vorteil in Kombination mit mineralischen Füllstoffen eingesetzt werden.

Bei der Verwendung von modifizierten Polyhydroxylverbindung der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und band II, 1964, Seiten 5—6 und 198—199, sowie in Kunststoff-Handbuch, Band VII, Vieweg-Höchtlen, Carl-Hanser-Verlag, München, 1966, z.B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 300—10 000, z.B. Mischungen von Polyäthern und Polyestern, eingesetzt werden.

Bei der Herstellung des Präpolymeren a) können anteilsweise ggf. auch niedermolekulare Kettenverlängerungsmittel mitverwendet werden, beispielsweise:

Ethylenglykol, Propylenglykol-(1,2) und -(1,3), Butylenglylok-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glycerin, Trimethylolpropan, Hexantriol-(1,2,6), Trimethylolethan, Pentaerythrit, Chinit, Mannit und Sorbit, Ricinusöl. Diethylenglykol, Triethylenglykol, Tetraethylenglykol, höhere Polyethylenglykole mit einem Molekulargewicht bis 300, Dipropylenglykol, höhere Polypropylenglykole mit einem Molekulargewicht bis 300, Dibutylenglykol, höhere Polybutylenglykole mit einem Molekulargewicht bis 300, 4,4'-Dihydroxy-diphenylpropan, Dihydroxymethylhydrochinon, Ethanolamin, Diethanolamin, N-Methyldiethanolamin, Triethanolamin und 3-Aminopropanol.

Als niedermolekulare Polyole kommen auch die Gemische von Hydroxylaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen als Polyolkomponente in Betracht (DE-Offenlegungsschrift 2 638 759).

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

Die als Komponente b) bei der Herstellung des Aminogruppen aufweisenden Präpolymers A) zu

verwendenden Verbindungen mit mindestens zwei Aminogruppen sind z.B. aliphatische und/oder aromatische Diamine.

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracylsäure und Terephthalsäure; Semi-carbazido-alkylen-hydrazide wie z.B. β-Semicarbazidopropionsäurehydrazid (DE-Offenlegungsschrift 1 770 591). Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispile für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 760 166) genannt. Beispiele für aliphatisch-aromatische Diamine sind die Aminoalkylthioaniline gemäß DE-Offenlegungsschrift 2 734 574.

Als Natriumalumosilikate können erfindungsgemäß z.B. die als Molekularsiebe im Handel befindlichen Zeolithe eingesetzt werden.

Erfindungsgemäß geeignete Aktivatoren sind Polyurethankatalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamid gruppen) aufweisende tertiäre Amine gemäß den De-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B.

Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyltetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neber schwefelhaltigen Verbindung wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Auch sauer reagierende Stoffe wie Salzsäure oder organische Sährehalogenide können gegebenenfalls mitverwendet werden, ferner Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden Zusatzstoffen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als Komponente B) der erfindungsgemäßen Formmassen kommen alle an sich bekannten Polyisocyanate (vorzugsweise Diisocyanate) mit einem Schmelzpunkt oberhalb von 120°C, vorzugsweise oberhalb von 150°C, in Frage. Beispiele hierfür sind u.a. 1,4-Dichlor-2,5-diisocyanatobenzol, 1-Chlor-4-methoxy-2,5-diisocyanato-benzol, 1,3-Dimethoxy-4,6-diisocyanatobenzol, 2,5,2',5'-Tetramethyl-4,4'-diisocyanatodiphenylmethan, Diphenylsulfon-4,4'-diisocyanat, Naphthylen-1,5-diisocyanat sowie das Harnstoffdiisocyanat aus 1 Mol Wasser und 2 Mol 2,4-Toluylendiisocyanat (s. DE—OS—2 902 469), wobei die drei letztgenannten Diisocyanate bevorzugt sind.

Das hochschmelzende Polyisocyanat wird vor seiner Verwendung vorzugsweise auf eine Teilchengröße $<40\ \mu m$ zerkleinert.

Als Komponente C) kommen alle an sich bekannten anorganischen und/oder organischen faserförmigen Verstärkungsmaterialien in Betracht wie z.B. Glasfasern (vorzugsweise in Längen zwischen 20 und 60 mm). Graphitfasern und Asbestfasern oder Fasermaterialien, die von einem organischen Polymeren stammen, wie z.B. von einem Polyester, Polyethylenterephthalat oder einem Polyamid, wie Polyhexamethylenadipamid oder Polycaprolactam. Diese Fasermaterialien können z.B. als Stoff, Matte, Band, Seil durchgehende Fasern oder zerhackte Stapelfasern vorliegen. Bevorzugt sind erfindungsgemäß Glasfasern, die in an sich bekannter Weise mit Schlichten ausgerüstet sind, welche den Fasern eine Affinität zu Polyurethanen verleihen (s. z.B. DE—AS—2 426 657 und DE—AS—2 426 654).

Die einzubauende Fasermaterialmenge hängt von der gewünschten Verbesserung der mechanischen Eigenschaften des Formkörpers ab. Im allgemeinen werden 5 bis 69 Gew.-% Fasermaterial, bezogen auf das Gesamtgewicht des faserverstärkten Körpers, angewendet.

Zusätzlich zu den Fasermaterialien können, wie schon erwähnt, auch andere Zusatzstoffe, z.B. teilchenförmige Füllstoffe, wie Kreide, Ruß, Ton, Eisenoxid, Glimmer, kieselsäurehaltige Materialien, Titandioxid und Farbpigmente, Gleit- und Trenmittel wie Zn-Stearat, UV-Absorber etc., mitverwendet werden.

Durchführung des erfindungsgemäßen Verfahrens

Vorzugsweise wird Komponente B) in Komponente a) suspendiert eingesetzt. Das Äquivalenzverhältnis von Komponente a) zu Komponente b) ist abhängig einerseits von der Funktionalität des NCO-Präpolymeren a) und andererseits von der Zahl der gegenüber Isocyanaten reaktiven Gruppen in Komponente b).

Ein relativ hoher Verzweigungsgrad macht ein niedriges Äquivalenzverhältnis erforderlich, um den Präpolymeren A) und damit der Formmasse einen Viskositätswert zu verleihen, der für die Weiterverarbeitung günstig ist. Umgekehrt muß eine niedrige Verzweigung durch ein höheres Äquivalenzverhältnis kompensiert werden. Im allgemeinen sollte bei einem Äquivalenzverhältnis $\leqq 0{,}5:1$ die mittlere Funktionalität der Komponenten b) und a) $\geqq 2{,}1$ sein; bei einem Äquivalenzverhältnis $\geqq 0{,}65:1$ beträgt die mittlere Funktionalität $\leqq 2{,}4$. Durch Vermischen der Suspension von Komponente B) in Komponente a) mit Komponente b) wird die Polyadditionsreaktion zwischen den reaktiven Gruppen von b) und dem in flüssiger Phase vorliegenden Präpolymer a) gestartet.

Nun können die Fasermaterialien C) z.B. nach der für UP-Harze üblichen Technologie

eingearbeitet werden (Tränkanlagen; Kneter). Die Einmischung der Fasern kann auch vorteilhaft in einer Zweischneckenknetmaschine erfolgen.

Die Reifezeit bis zum Erreichen des lagerfähigen, hitzeverpreßbaren Zwischenprodukts beträgt je nach Temperatur, Aktivatormenge und Auswahl der Rohstoffe einige Minuten bis Stunden Innerhalb dieser Zeit vollzieht sich die Bildung des Aminogruppen aufweisenden Präpolymeren A), überraschenderweise ohne wesentliche Beteiligung des hochschmelzenden Polyisocyanats B), wie sich durch Titration des Gesamt-NCO-Gehalts mit n-Dibutylamin nachweisen läßt.

Die erfindungsgemäßen Formmassen weisen nach Beendigung der Reifezeit — je nach Temperatur — eine für die Praxis ausreichende Lagerstabilität von mindestens 10 Tagen auf. (Bei Ausschluß von Luftfeuchtigkeit und Temperaturen unter 20°C beträgt die Lagerstabilität mehrere Monate.) Innerhalb dieser Zeit können die Formmassen durch Einwirkung von Temperaturn oberhalb 90°C, vorzugsweise zwischen 110 und 150°C, und Drücken zwischen 10 und 300 bar verformt und innerhalb von ca. 1 bis 10 Minuten zu Formkörpern ausgehärtet werden, die bei einer vergleichsweise hohen Biegesteifigkeit eine gute Schlagzähigkeit und Dimensionsstabilität besitzen.

Die folgenden Beispile erläutern die vorliegende Erfindung. Wenn nicht anders vermerkt, sind Mengenangaben als Gewichtsteile bzw. Gewichtsprozente zu verstehen.

Beispiel 1

Komponente I)

85.1 Teile eines NCO-Gruppen aufweisenden Präpolymers, gebildet durch Umsetzung eines linearen Polypropylenglykols (Molekulargewicht 2000) mit 2,4-Toluylendiisocyanat im Molverhältnis 1:8 und Entfernen des überschüssigen Diisocyanats durch Dünnschichten, mit einem NCO-Gehalt von 4,1%.

14.9 Teile Harnstoffdiisocyanat, gebildet aus 1 Mol Wasser und 2 Mol 2,4-Toluylendiisocyanat, mit einem NCO-Gehalt von 25,0%.

Komponente II)

12.6 Teile Diethyltoluylendiamin

0.1 Teile einer 33 %igen Lösung von Diazabicyclooctan in Dipropylenglykol

0.015 Teil einer 24 %igen Lösung von Blei(II)octoat in Testbenzin.

Komponente III)

55 Teile Glasrovings aus einer handelsüblichen Faser mit einem Durchmesser von 11 bis 14 $\mu$, die mit Polyvinylacetate als Filmbildner geschlichtet ist; zwei Drittel geschnitten auf 52 mm, ein Drittel geschnitten auf 26 mm Länge.

a) Herstellung der erfindungsgemäßen Formpreßmasse

Zunächst werden die Komponenten I und II über geeignete Dosier- und Mischaggregate homogen miteinander im angegebenen Verhältnis vermischt. Die reaktive Masse wird auf einer Polyethylenfolie in 1 bis 2 mm Dicke ausgerakelt. Die Topf- bzw. Rakelzeit liegt bei etwa 2 Minuten.

Auf die ausgerakelte Schicht werden dann die Glasrovings gestreut und mit einer zweiten, ebenfalls auf eine Polyethylenfolie gerakelten Schicht der rekativen Masse abgedeckt. Mittels geriffelter Andruckwalzen wird daraufhin für eine einwandfreie Durchtränkung der Glasfasern gesorgt. Nach Beendigung der bei Raumtemperatur ablaufenden Prepolymer-Reaktion kann die Polyethylenfolie von der Harzmatte abgezogen werden.

Zur Messung der Viskosität von Komponente A) wird gemäß Beispiel 1 das Vorpolymer a) mit dem Diamin B) im angegebenen Mengenverhältnis vermischt, auf Polyethylenfolie, gegossen und mit einer zweiten Folie abgedeckt.

Nach drei Tagen Lagerung wird die Viskosität im Hochdruckkolbenviskosimeter HKV 2000 (Fa. Göttfert, BRD) bestimmt. Sie beträgt $1{,}9 \cdot 10^8$ mPas/25°C.

b) Herstellung eines Formkörpers

Um Formteile herzustellen, werden der jeweiligen Form entsprechende Teile aus der Matte herausgeschnitten und bei 120°C und 75 bar verpreßt. Die Aushärtung erfolgt je nach Schichtstärke in 3 bis 10 Minuten. Das Fertigteil kann anschließend heiß entformt werden. Es ist auch möglich, mehrere Schichten übereinander in die Form einzulegen, da das Material beim Preßvorgang homogen ineinanderfließt. Auch bei längeren Fließwegen ist ein einwandfreier Transport der Glasfasern bis in die äußersten Ecken des Formteils gewährleistet. Unter Ausschluß von Luftfeuchtigkeit unterhalb 20°C gelagerte, nach a) hergestellte Formpreßmassen waren auch nach mehreren Monaten noch verarbeitbar.

An den wie unter b) beschrieben hergestellten ausgehärteteten Prüfplatten wurden folgende Eigenschaften gemessen:

Prüfwerte ohne Glasfaser (Vergleich)

| | | |
|---|---|---|
| Dichte nach DIN 53479 | 1.08 | Mg/m³ |
| Härte Shore A/D nach DIN 53505 | 90/37 | |
| Zugfestigkeit nach DIN 53504 | 9.3 | MPa |
| Reißdehnung nach DIN 53504 | 275 | % |
| Weiterreißfestigkeit nach DIN 53515 | 26.5 | KN/m |
| Biegemodul nach ASTM D 790-71 | 47 | MPa |
| Längenausdehnungskoeffizient nach VDE 0304/Teil | 240 | $10^{-6}$ $grad^{-1}$ |

Prüfwerte mit Glasfasern

| | | |
|---|---|---|
| Dichte nach DIN 53479 | 1.32 | Mg/m³ |
| Zugfestigkeit nach DIN 53504 | 40 | MPa |
| Reißdehnung nach DIN 53504 | 22 | % |
| Weiterreißfestigkeit nach DIN 53515 | 262 | KN/m |
| Biegemodul nach ASTM D 790-71 | 1010 | MPa |
| Längenausdehnungskoeffizient nach VDE 0304/Teil 1 | 10 | $10^{-6}$ $grad^{-1}$ |
| Kälteschlagzähigkeit bei —30°C nach DIN 53453 | 75 | KJ/m² |

Beispiel 2

Komponente I)

88 Teile des NCO-Gruppen aufweisenden Präpolymeren aus Beispiel 1

12 Teile des Harnstoffdiisocyanats aus Beispiel 1.

Komponente II)

12,4 Teile Diethyltoluylendiamin

Komponente III)

74,9 Teile 6 mm langer chopped aus einer handelsüblichen Faser mit einem Durchmesser von 11 bis 14 µm, die gemäß Beispiel 1 von DE—AS—2 426 657 beschlichtet ist.

Zur Herstellung der erfindungsgemäßen Formpreßmasse wird eine Zweischnecken-Knetmaschine (Fabrikat ZSK 53 v, Fa. Werner & Pfleiderer, BRD), benutzt.

Komponente I wird über eine Zahnradpumpe, Komponente II über eine Boschpumpe dosiert. Die Glasfasern gelangen über eine Doppeldosierschnecke und Trichter in das Gehäuse 1, die Isocyanatsuspension I wird in das Gehäuse 2, das Diamin II in das Gehäuse 6 der Knetmaschine eingespeist. Das ca. 45°C warme Extrudat wird auf einer Polyethylenfolie aufgefangen und mit einer zweiten Folie abgedeckt. Nach zwei Stunden Reifung werden analog zu Beispiel 1 Prüfplatten gepresst.

Prüfwerte ohne Glasfer (Vergleich)

| | | |
|---|---|---|
| Dichte nach DIN 53 479 | 1,08 | Mg/m³ |
| Härte Shore A/D nach DIN 53 505 | 89/35 | |
| Zugfestigkeit nach DIN 53 504 | 8,7 | MPa |
| Reißdehnung nach DIN 53 504 | 290 | % |
| Weiterreißfestigkeit nach DIN 53 515 | 22 | KN/m |
| Biegemodul nach ASTM D 790-71 | 42 | MPa |
| Längenausdehnungskoeffizient nach VDI 0304/Teil 1 | 223 | . $10^{-6}$ $grad^{-1}$ |

Prüfwerte mit Glasfasern

| | | |
|---|---|---|
| Dichte nach DIN 53 479 | 1,30 | $Mg/m^3$ |
| Zugfestigkeit nach DIN 53 504 | 16,3 | MPa |
| Reißdehnung nach DIN 53 504 | 29 | % |
| Weiterreißfestigkeit nach DIN 53 515 | 90 | KN/m |
| Biegemodul nach ASTM D 790-71 | 400 | MPa |
| Längenausdehnungskoeffizient nach VDI 0304/Teil 1 | 25 | $\cdot 10^{-6}$ $grad^{-1}$ |
| Kälteschlagzähigheit bei —30°C nach DIN 53 453 | nicht gebrochen | |

**Patentansprüche**

1. Im wesentlichen lösungsmittelfreie Formmassen aus

A) 92—30 Gew.-%, bevorzugt 87—32 Gew.-%, einer gegenüber Isocyanaten reaktive Wasserstoffatome aufweisenden Verbindung,
B) 24—1 Gew.-%, bevorzugt 18 bis 2 Gew.-%, eines Polyisocyanates mit einem Schmelzpunkt oberhalb von 120°C und
C) 5—69 Gew.-%, bevorzugt 11 bis 50 Gew.-%, eines organischen oder anorganischen Füllstoffes,

wobei das Äquivalentverhältnis zwischen NCO-Gruppen (unter Berücksichtigung verkappter NCO-Gruppen) und aktiven H-Atomen der Komponenten A bzw. B zwischen 1:1 und 1:1,75 liegt, dadurch gekennzeichnet, daß Komponente A ein Aminogruppen aufweisendes Präpolymer ist, das

0,3 bis 4 Gew.-% an freien primären und/oder sekundären Aminogruppen,
1,5 bis 10 Gew.-% an Urethangruppen und
1,5 bis 10 Gew.-% an Harnstoffgruppen, sowie gegebenenfalls
1 bis 5 Gew.-% eines Molekularsiebs vom Natriumalumosilikat-Typ und
0,1 bis 5 Gew.-%, jeweils bezogen auf Präpolymer, eines oder mehrerer Aktivatoren enthält, und daß

der als Komponente C verwendete Füllstoff ein Fasermaterial mit einer Faserlänge von 0,1 bis 100 mm ist.

2. Formmasse nach Anspruch 1, dadurch gekennzeichnet, daß Komponente A 0,5 bis 2 Gew.-% an Aminogruppen enthält.

3. Formmasse nach Ansprüchen 1 und 2, dadurch gekennzeichnet, daß Komponente A 5 bis 7,5 Gew.-% an Urethangruppen enthält.

4. Formmasse nach Ansprüchen 1 bis 3, dadurch gekennzeichnet, daß Komponente A 5 bis 7,5 Gew.-% an Harnstoffgruppen enthält.

5. Formmasse nach Ansprüchen 1 bis 4, dadurch gekennzeichnet, daß Komponente B einen Schmelzpunkt oberhalb von 150°C aufweist.

6. Formmasse nach Anspruch 5, dadurch gekennzeichnet, daß Komponente B eine Harnstoffdiisocyanat aus 1 Mol Wasser und 2 Mol 2,4-Toluylendiisocyanat ist.

7. Formmasse nach Ansprüchen 1 bis 6, dadurch gekennzeichnet, daß Komponente C ein Glasfasermaterial mit einer Länge von 20 bis 60 mm ist.

8. Verfahren zur Herstellung der Formmassen nach Ansprüchen 1 bis 7, dadurch gekennzeichnet, daß man bei einer Temperatur von 10 bis 70°C, vorzugsweise bei 20 bis 50°C,

a) 95 bis 70 Gew.-%, bevorzugt 90—75°C, bezogen auf die Summe a)+b), eines NCO-Gruppen auf weisenden Präpolymeren mit
b) 5 bis 30 Gew.-%, bevorzugt 10 bis 25 Gew.-%, bezogen auf a)+b), einer Verbindung mit 2 bis 4 Aminogruppen bzw. einer dazu äquivalenten Menge Wasser, gegebenenfalls in Gegenwart von
c) 1 bis 5 Gew.-%, bezogen auf a)+b), eines Molekularsiebs vom Natriumaluminosilikat-Typ und/oder
d) 0,1 bis 5 Gew.-%, bezogen auf a)+b), eines oder mehrerer Aktivatoren,

zu einem 0,3 bis 4 Gew.-% an primären und/oder sekundären Aminogruppen, 1,5 bis 10 Gew.-% Urethangruppen und 1,5 bis 10 Gew.-% Harnstoffgruppen aufweisenden Vorpolymeren A umsetzt, mit der Maßgabe, daß die Koponenten a) und b) bei der gewählten Reaktionstemperature flüssig sind und das Äquivalentverhältnis zwischen den NCO-Gruppen der Komponente a) zu den Aminogruppen der Komponente b) zwischen 0,40:1 und 0,85:1 liegt, wobei man vor oder während der Polyadditionsreaktion der Komponenten a) und b) 1 bis 24 Gew.-%, bezogen auf A+B+C, eines festen, vorzugsweise

auf eine Teilchengröße <40 µm zerkleinerten Polyisocyanats B mit einem Schmelzpunkt oberhalb von 120°C und 5 bis 69 Gew.-%, bezogen auf A+B+C, eines Fasermaterials C mit einer Faserlänge von 0,1 bis 100 mm zusetzt.

9. Verfahren nach Anspruch 8, dadurch gekennzeichnet, daß man Komponente B suspendiert in Komponente a einsetzt und das Fasermaterial C im Verlauf der Polyadditionsreaktion zwischen den Komponenten a und b einarbeitet.

10. Verwendung von Formmassen zur Herstellung von faserverstärkten Formkörpern auf Polyurethanbasis, dadurch gekennzeichnet, daß man Formmassen nach Ansprüchen 1 bis 9 bei einer Temperatur oberhalb von 90°C, vorzugsweise zwischen 110 und 150°C, und einem Druck zwischen 10 und 300 bar unter Formgebung aushärtet.

**Revendications**

1. Masses de moulage essentiellement exemptes de solvant du départ de

A) 92—30% en poids, de préférence 87—32% en poids, d'un composé présentant des atomes d'hydrogène réactifs envers les isocyanates,
B) 24—1% en poids, de préférence 18 à 2% en poids, d'un polyisocyanate ayant un point de fusion supérieur à 120°C et
C) 5—69% en poids, de préférence 11 à 50% en poids, d'une matière de charge organique ou minérale,

le rapport d'équivalence entre groupes NCO (en tenant compte des groupes NCO masqués) et atomes H actifs des composants A et B se situant entre 1:1 et 1:1,75, caractérisées en ce que le composant A est un prépolymère présentant des groupes amino, qui contient:

0,3 à 4% en poids de groupes amino libres primaires et/ou secondaires,
1,5 à 10% en poids de groupes uréthane et
1,5 à 10% en poids de groupes urée, de même qu'éventuellement
1 à 5% en poids d'un tamis moléculaire du type aluminosilicate de sodium et
0,1 à 5% en poids, chaque fois rapporté au prépolymère, d'un ou de plusieurs activateurs, et en ce que

la matière de charge utilisée en tant que composant C est un matériau fibreux ayant une longueur de fibre de 0,1 à 100 mm.

2. Masse de moulage selon la revendication 1, caractérisée en ce que le composant A contient 0,5 à 2% en poids de groupes amino.

3. Masse de moulage selon les revendications 1 et 2, caractérisée en ce que le composant A contient 5 à 7,5% en poids de groupes uréthane.

4. Masse de moulage selon les revendications 1 à 3, caractérisée en ce que le composant A contient 5 à 7,5% en poids de groupes urée.

5. Masse de moulage selon les revendications 1 à 4, caractérisée en ce que le composant B présente un point de fusion supérieur à 150°C.

6. Masse de moulage selon la revendication 5, caractérisée en ce que le composant B est un urée-diisocyanate au départ de 1 mole d'eau et de 2 moles de 2,4-toluylène-diisocyanate.

7. Masse de moulage selon les revendications 1 à 6, caractérisée en ce que le composant C est un matériau en fibre de verre ayant une longueur de 20 à 60 mm.

8. Procédé de fabrication de masses de moulage suivant les revendications 1 à 7, caractérisé en ce qu'à une température de 10 à 70°C, de préférence de 20 0 50°C,

a) on fait réagir 95 à 70% en poids, de préférence 90—75% en poids, par rapport à la somme a)+b), d'un prépolymère présentant des groupes NCO, avec
b) 5 à 30% en poids, de préférence 10 à 25% en poids, par rapport à a)+b), d'un composé ayant 2 à 4 groupes amino ou d'une quantité d'eau équivalente à celui-ci, éventuellement en présence de
c) 1 à 5% en poids, par rapport à a)+b), d'un tamis moléculaire du type aluminosilicate de sodium et/ou de
d) 0,1 à 5% en poids, par rapport à a)+b), d'un ou de plusieurs activateurs,

pour obtenir un prépolymère A présentant 0,3 à 4% en poids de groupes amino primaire et/ou secondaires, 1,5 à 10% en poids de groupes uréthane et 1,5 à 10% en poids de groupes urée, avec comme mesure que les composants a) et b) à la température de réaction choisie soient liquides et que le rapport d'équivalence entre les groupes NCO du composant a) et les groupes amino du composant b) se situe entre 0,40:1 et 0,85:1, en ajoutant, avant ou pendant la réaction de polyaddition aux composants a) et b) 1 à 24% en poids, par rapport à A+B+C, d'un polyisocyanate B solide, de préférence broyé à une dimension de particule inférieure à 40 µm et ayant un point de fusion supérieur

à 120°C, et 5 à 69% en poids, par rapport à A+B+C, d'un matériau fibreux C ayant une longueur de fibre de 0,1 à 100 mm.

9. Procédé selon la revendication 8, caractérisé en ce qu'on utilise le composant B en suspension dans le composant a et en ce qu'on incorpore le matériau fibreux C au cours de la réaction de polyaddition entre les composants a et b.

10. Utilisation de masses de moulage pour la fabrication de corps moulés, renforcés par des fibres, à base de polyuréthanes, caractérisée en ce qu'on durcit complètement tout en conférant une forme des masses de moulage selon les revendications 1 à 9 à une température supérieure à 90°C, de préférence entre 110 et 150°C, sous une pression entre 10 et 300 bars.

**Claims**

1. Substantially solvent-free moulding compositions consisting of

A) 92—30% by weight, preferably 87—32% by weight, of a compound containing hydrogen atoms reactive towards isocyanates,
B) 24—1% by weight, preferably 18 to 2% by weight, of a polyisocyanate having a melting point above 120°C and
C) 5—69% by weight, preferably 11 to 50% by weight, of an organic or inorganic filler,

the equivalent ratio between NCO groups (including masked NCO groups) and active H-atoms of components A and B being between 1:1 and 1:1.75, characterised in that component A is a prepolymer containing amino groups, which contains

0.3 to 4% by weight of free primary and/or secondary amino groups,
1.5 to 10% by weight of urethane groups and
1.5 to 10% by weight of urea groups, and optionally
1 to 5% by weight of a molecular sieve of the sodium aluminosilicate type and
0.1 to 5% by weight, based in each case on the prepolymer, of one or more activators,

and in that the filler used as component C is a fibrous material having a fibre length of 0.1 to 100 mm.

2. Moulding composition according to Claim 1, characterised in that component A contains 0.5 to 2% by weight of amino groups.

3. Moulding composition according to Claims 1 and 2, characterised in that component A contains 5 to 7.5% by weight of urethane groups.

4. Moulding composition according to Claim 1 to 3, characterised in that component A contains 5 to 7.5% by weight of urea groups.

5. Moulding composition according to Claims 1 to 4, characterised in that component B has a melting point above 150°C.

6. Moulding composition according to Claim 5, characterised in that component B is a urea diisocyanate of 1 mol of water and 2 mols of 2,4-toluylene diisocyanate.

7. Moulding composition according to Claims 1 to 6, characterised in that component C is a glass fibre material having a length of 20 to 60 mm.

8. Process for the production of the moulding compositions according to Claims 1 to 7, characterised in that at a temperature of 10 to 70°C, preferably at 20 to 50°C,

a) 95 to 70% by weight, preferably 90—75°C, based on the sum of a)+b), of a prepolymer containing NCO groups are reacted with
b) 5 to 30% by weight, preferably 10 to 25% by weight, based on a)+b), of a compound having 2 to 4 amino groups or a quantity of water equivalent thereto, optionally in the presence of
c) 1 to 5% by weight, based on a)+b), of a molecular sieve of the sodium aluminosilicate type and/or
d) 0.1 to 5% by weight, based on a)+b), of one or more activators,

to give a prepolymer A containing 0.3 to 4% by weight of primary and/or secondary amino groups, 1.5 to 10% by weight of urethane groups and 1.5 to 10% by weight of urea groups, with the proviso that the components a) and b) are liquid at the selected reaction temperature and the equivalent ratio between the NCO groups of component a) and the amino groups of component b) is between 0.40:1 and 0.85:1, 1 to 24% by weight, based on A+B+C, of a solid polyisocyanate B, which has a melting point above 120°C and has preferably been comminuted to a particle size of <40 $\mu$m, and 5 to 69% by weight, based on A+B+C, of a fibrous material C having a fibre length of 0.1 to 100 mm, being added before or during the polyaddition reaction of components a) and b).

9. Process according to Claim 8, characterised in that component B is used suspended in component a and the fibrous material C is worked in in the course of the polyaddition reaction between components a and b.

10. Use of moulding compositions for the production of fibre-reinforced mouldings based on polyurethane, characterised in that moulding compositions according to Claims 1 to 9 are cured while being moulded at a temperature of above 90°C, preferably of between 110 and 150°C, and under a pressure of between 10 and 300 bar.